# EUROPEAN PATENT APPLICATION

(11) **EP 4 523 532 A1**
(43) Date of publication of application: **19.03.2025**
(21) Application number: 23835469.0
(22) Date of filing: 03.07.2023
(51) Int. Cl.: A01N 43/50, A01G 7/06, A01N 25/00, A01N 37/02, A01N 37/36, A01N 37/44, A01N 37/46, A01N 43/36, A01N 43/38, A01N 47/44, A01P 21/00

(54) **PLANT GROWTH REGULATOR, PLANT GROWTH ACCELERATION METHOD, OR PLANT GROWTH-REGULATING PRODUCT**

(30) Priority: 06.07.2022 JP 2022109160
(71) Applicant: Kureha Corporation, Chuo-ku Tokyo 103-8552 (JP)
(72) Inventor: KOSHIYAMA, Tatsuyuki, Tokyo 103-8552 (JP); HIGASHIYAMA, Yukihiro, Tokyo 103-8552 (JP)
(74) Representative: Hoefer & Partner Patentanwälte mbB
(86) International application number: PCT/JP2023/024583
(87) International publication number: WO 2024/009937

(57) **Abstract**

A plant growth regulator of the present disclosure includes: a compound represented by Formula (I) below or its tautomer, or an agrochemically acceptable salt thereof; and at least one component selected from the group consisting of an amino acid, a 2 or more and 10 or less amino-acid-long peptide, a betaine, an organic acid or a salt thereof, a nucleobase, a vitamin, and a sugar or a sugar alcohol.

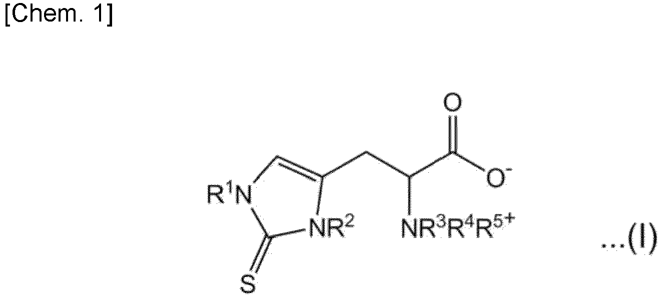

## Description

### [TECHNICAL FIELD]

The present invention relates to a plant growth regulator, a method for promoting plant growth, and a plant growth regulating product.

### [BACKGROUND ART]

There has been a demand for an agent having a high plant growth promoting effect on a wide range of plants. As such an agent, for example, ergothioneine has been known.

Patent Document 1 describes a fertilizer containing ergothioneine or a culture product of microorganisms that can biosynthesize ergothioneine.

Patent Documents 2 and 3 describe application of 2-mercaptohistidine betaine, which is ergothioneine, to a plant. It is described that, by such application, stress of a plant and conditions related to the stress can be controlled, and growth of the plant can be promoted.

Patent Document 4 describes application of a simple substance ergothioneine to plants. It also discloses that the application promotes growth of the plants or increases yield.

Patent Document 5 describes application, as a fertilizer, of a microorganism extract containing ergothioneine as an antioxidant necessary for assimilation of methanol. It is described that, by such application, nitrogenase activity is enhanced.

### [Citation List]

### [Patent Document]

Patent Document 1: JP 2018-130091 A
Patent Document 2: WO 96/14749
Patent Document 3: WO 96/23413
Patent Document 4: WO 2021/005970
Patent Document 5: EP 3696154 A

### [SUMMARY OF INVENTION]

### [Technical Problem]

However, the known agents may not have sufficient growth promoting effect, and there is a demand for development of a plant growth regulator exhibiting an excellent growth promoting effect.

The present invention has been made in view of the above objective, and an object of the present invention is to provide a plant growth regulator excellent in the plant growth promoting effect.

### [Solution to Problem]

As a result of diligent research, the present inventors found that a plant growth regulator containing ergothioneine and a specific component exhibits superior plant growth promoting action to that of ergothioneine alone. In addition, the present inventors found that the plant growth regulator exhibits a further superior plant growth promoting action to a theoretical plant growth promoting action obtained when ergothioneine is mixed with a specific component, and have completed the present invention.

A plant growth regulator according to an embodiment of the present invention includes:
a compound represented by Formula (I) below or its tautomer, or an agrochemically acceptable salt thereof; and
at least one component selected from the group consisting of an amino acid, a 2 or more and 10 or less amino-acid-long peptide, a betaine, an organic acid or a salt thereof, a nucleobase, a vitamin, and a sugar or a sugar alcohol: 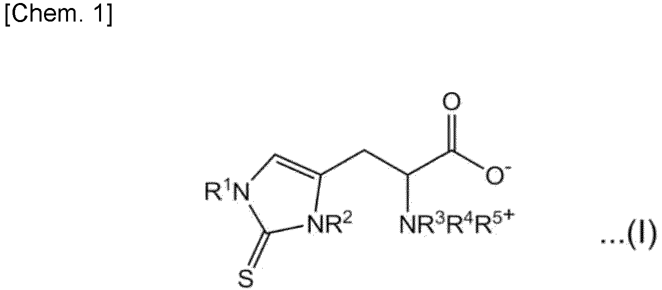
where in Formula (I), R¹ and R² each independently represent a hydrogen atom or an alkyl group having from 1 to 4 carbons, and R³ to R⁵ each independently represent an alkyl group having from 1 to 4 carbons.

### [Advantageous Effects of Invention]

According to an embodiment of the present invention, a plant growth regulator having an excellent plant growth promoting effect can be provided.

### [Description of Embodiments]

### [Plant growth regulator]

A plant growth regulator according to one aspect of the present invention includes: a compound represented by Formula (I) or its tautomer, or an agrochemically acceptable salt thereof; and a component selected from the group consisting of an amino acid, a 2 or more and 10 or less amino-acid-long peptide, a betaine, an organic acid or a salt thereof, a nucleobase, a vitamin, and a sugar or a sugar alcohol.

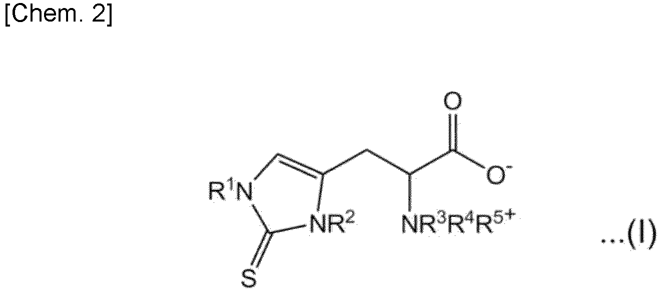

Hereinafter, the "compound represented by Formula (I) or its tautomer, or an agrochemically acceptable salt thereof" is sometimes collectively referred to as compound (I). In addition, the "component selected from the group consisting of an amino acid, a 2 or more and 10 or less amino-acid-long peptide, a betaine, an organic acid or a salt thereof, a nucleobase, a vitamin, and a sugar or a sugar alcohol" is sometimes referred to as component (A).

### (Compound (I))

In Formula (I), R¹ and R² each independently represent a hydrogen atom or an alkyl group having 1 to 4 carbon atoms. The alkyl group may be linear or branched, that is, may be a methyl group, an ethyl group, a propyl group, an isopropyl group, a butyl group, an isobutyl group, a sec-butyl group or a tert-butyl group.

At least one of R¹ or R² is preferably a hydrogen atom, and more preferably both are hydrogen atoms. When R¹ and R² are alkyl groups, they are preferably methyl groups, ethyl groups or propyl groups, more preferably methyl groups or ethyl groups, and even more preferably methyl groups.

In Formula (I), R³ to R⁵ each independently represent an alkyl group having from 1 to 4 carbons. R³ to R⁵ are each preferably independently a methyl group, an ethyl group or a propyl group, more preferably a methyl group or an ethyl group, and even more preferably a methyl group. At least one of R³ to R⁵ is preferably a methyl group, more preferably at least two are methyl groups, and even more preferably all are methyl groups.

The expression "its tautomer" refers to a tautomer of the compound represented by Formula (I). The compound represented by Formula (I) has a tautomer when at least one of R¹ or R² is a hydrogen atom. More specifically, when R² is a hydrogen atom in Formula (I), a compound represented by Formula (II) below can exist as a tautomer. When R¹ is a hydrogen atom in Formula (I), a compound represented by Formula (III) below can exist as a tautomer.

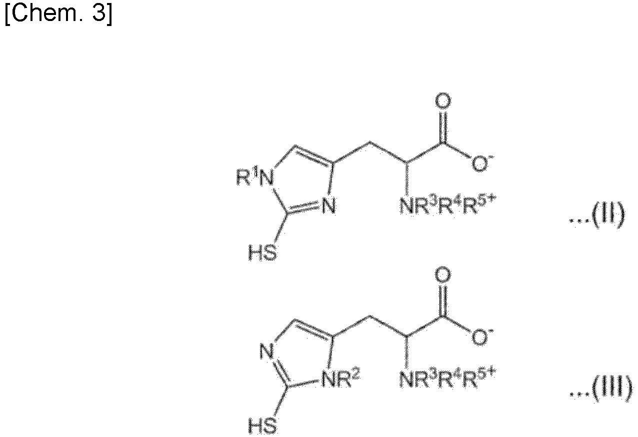

where in Formulas (II) and (III), R¹ to R⁵ are the same as R¹ to R⁵ in Formula (I).

A preferred compound as the compound represented by Formula (I) or its tautomer is specifically ergothioneine, and more preferably L-(+)-ergothioneine.

Ergothioneine may be commercially available or may be obtained by extraction from a microorganism that produces ergothioneine. As the ergothioneine-producing microorganisms, for example, microorganisms known as the ergothioneine-producing microorganisms can be used but the ergothioneine-producing microorganisms are not limited thereto. The microorganisms may be isolated from the natural environment. The microorganisms may have been mutated or undergone a treatment, such as genetic recombination, as long as the microorganisms have capability of producing ergothioneine.

As the compound represented by Formula (I) or its tautomer, those synthesized by a technique well known to those skilled in the art (for example, a technique described in JP 2013-506706 T or JP 2006-160748 A) may be used.

"Agrochemically acceptable" usually means those are safe, non-toxic, and not undesired biologically or otherwise, but those acceptable for pesticides, especially for pesticides that promote plant growth.

The "agrochemically acceptable salt" of the compound represented by Formula (I) or its tautomer is a salt that is agrochemically acceptable as defined above, and means those which can provide the action and effect of the compound represented by Formula (I) or its tautomer. Examples of such salts include hydrates, solvates, acid addition salts, salts formed when an acidic proton present in the compound represented by Formula (I) or its tautomer is replaced by a metal ion, and salts formed when the acidic proton coordinates with an organic base or an inorganic base.

The acid addition salt may be formed with an inorganic acid or an organic acid. Examples of the inorganic acids include hydrochloric acid, hydrobromic acid, sulfuric acid, nitric acid, and phosphoric acid. Examples of the organic acids include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in the compound represented by Formula (I) or its tautomer include an alkali metal ion, an alkaline earth metal ion, and an aluminum ion.

Examples of the organic base capable of coordinating with the acidic proton present in the compound represented by Formula (I) or its tautomer include diethanolamine, ethanolamine, N-methylglucamine, triethanolamine, and tromethamine. Examples of the inorganic base include aluminum hydroxide, calcium hydroxide, potassium hydroxide, sodium carbonate, and sodium hydroxide.

The plant growth regulator according to an embodiment of the present invention preferably includes a compound represented by Formula (I) or an agrochemically acceptable salt thereof as an active ingredient. The plant growth regulator according to an embodiment of the present invention may include, as active ingredients, a plurality of compounds or agrochemically acceptable salts thereof, among the compounds represented by Formula (I) or their tautomers.

Normally, in a solution, the compound represented by Formula (I) and the compound represented by Formula (II) or (III) can exist in equilibrium. A ratio of the compound represented by Formula (I) to the compound represented by Formula (II) or (III) can vary depending on the solvent, temperature, pH or the like.

A content of the compound (I) in the plant growth regulator according to an embodiment of the present invention may be 0.1 ppm or greater, or 1 ppm or greater. Furthermore, a quantity of the compound (I) used may be 0.0001 kg or greater, or 0.001 kg or greater, per 1 ha of an agricultural or horticultural area, such as fields, paddy fields, orchards, and greenhouses. The concentration and used quantity of the compound (I) in the plant growth regulator according to an embodiment of the present invention differ depending on the form of the agent, time of use, usage method, usage location, target crops and the like, and thus may be increased or decreased without regard to the above ranges.

### (Component (A))

### <Amino acid>

The amino acid may be an acidic, neutral or basic amino acid. The amino acid may be a polar amino acid or a nonpolar amino acid. The amino acid may contain sulfur.

Examples of the amino acid include glutamic acid, aspartic acid, histidine, arginine, lysine, glycine, alanine, valine, leucine, isoleucine, threonine, phenylalanine, tyrosine, tryptophan, proline, serine, glutamine, asparagine, 5-aminolevulinic acid, γ-aminobutyric acid, cysteine, methionine and ornithine. One type of amino acid or two or more types of amino acids may be used.

### <Peptide>

The peptide may be 2 or more and 10 or less amino-acid long, and, for example, may be 2 or more and 6 or less amino acid long. Examples of preferred peptides include glutathiones, such as oxidized glutathione and reduced glutathione. One type of peptide or two or more types of peptides may be used.

### <Betaine>

The betaine is preferably an N-alkyl-substituted amino acid, more preferably an N-trialkyl-substituted amino acid, and still more preferably an N-trimethyl-substituted amino acid, from the viewpoint of synergistic effects with the compound (I) described above. Examples of the betaine include glycine betaine, alanine betaine and glutamic acid betaine. Examples of the N-trialkyl-substituted amino acid include an N-trialkyl-substituted amino acid selected from glutamic acid, aspartic acid, histidine, arginine, lysine, glycine, alanine, valine, leucine, isoleucine, threonine, phenylalanine, tyrosine, tryptophan, proline, serine, glutamine, asparagine, 5-aminolevulinic acid, γ-aminobutyric acid, cysteine, methionine and ornithine, and carnitine. One type of betaine or two or more types of betaines may be used.

### <Organic acid or salt thereof>

Examples of the organic acid include a carboxylic acid, a sulfonic acid, a phenol and a thiol. One type of organic acid or salt thereof or two or more types of organic acids or salts thereof may be used.

The number of carbons of the carboxylic acid may be 1 or more and 10 or less, or 1 or more and 6 or less. The carboxylic acid may be a monocarboxylic acid, a dicarboxylic acid or a tricarboxylic acid. Examples of the carboxylic acid include lactic acid, glycolic acid, formic acid, acetic acid, propionic acid, butyric acid, oxalic acid, malonic acid, succinic acid, adipic acid, citric acid, glutaric acid, malic acid, ascorbic acid, tartaric acid, fumaric acid, maleic acid, pyruvic acid and benzoic acid.

Examples of the phenol include a phenol and aminophenol.

Examples of the sulfonic acid include methanesulfonic acid, ethanesulfonic acid, propanesulfonic acid, butanesulfonic acid, pentanesulfonic acid, hexanesulfonic acid, benzenesulfonic acid and toluenesulfonic acid.

Examples of the organic acid salt include alkali metal salts such as sodium salts and lithium salts; and alkaline earth metal salts such as magnesium salts and calcium salts.

From the viewpoint of the synergistic effects with the compound (I) described above, the organic acid or salt thereof is preferably a carboxylic acid or a salt thereof, more preferably a carboxylic acid having 1 or more and 10 or less carbons or a salt thereof, and still more preferably acetic acid, citric acid or maleic acid or a salt thereof.

### <Nucleobase>

The nucleobase refers to a base contained in a nucleotide molecule constituting deoxyribonucleic acid or ribonucleic acid. One type of nucleobase or two or more types of nucleobases may be used. Examples of the nucleobase include guanine, thymine, uracil, adenine and cytosine.

### <Vitamin>

Examples of the vitamin include fat-soluble vitamins or water-soluble vitamins. One type of vitamin or two or more types of vitamins may be used. Further, the two or more types of vitamins may include fat-soluble vitamins only, or water-soluble vitamins only, or may include one or more types of fat-soluble vitamins and one or more types of water-soluble vitamins.

Examples of the fat-soluble vitamins include vitamins A, vitamins D, vitamins E and vitamins K. Examples of the vitamins D include vitamin D2, vitamin D3 and vitamin D4. Examples of the water-soluble vitamins include vitamins B such as vitamin B1, vitamin B2, vitamin B6 and vitamin B12, and vitamins C.

### <Sugar or sugar alcohol>

One type of sugar or sugar alcohol or two or more types of sugars or sugar alcohols may be used. Examples of the sugar include monosaccharides, disaccharides and polysaccharides. Examples of the monosaccharide include glucose, fructose and galactose. Examples of the disaccharide include trehalose, lactose, maltose and sucrose. Examples of the polysaccharide include cellulose and starch.

Examples of the sugar alcohol include mannitol, inositol, erythritol, xylitol and sorbitol.

In the plant growth regulator according to an embodiment of the present invention, a mass ratio of the component (A) to the compound (I) (component (A)/compound (I)) may be 0.001 or more, 0.01 or more, 0.1 or more, or 0.5 or more. In addition, the mass ratio may be 1000 or less, 100 or less, 10 or less, or 5 or less.

The plant growth regulator according to an embodiment of the present invention can be prepared by mixing the compound (I) and the component (A). The plant growth regulator may be an extract of microorganisms, plants and seaweeds containing the compound (I) and the component (A).

The plant growth regulator according to an embodiment of the present invention contains the compound (I) and the component (A) as active ingredients, thereby synergistically exhibiting an excellent growth promoting effect in a plant treated with the regulator. In the present specification, "excellent in growth promoting effect" means that at least one of the plant growth indices is superior to known plant growth regulators. Examples of the "plant growth index" include plant height, part weight, underground part weight, number of tillers, root yield, stem yield, number of leaves, leaf yield, number of flowers, number of fruits, fruit yield, number of seeds, and seed yield of a plant. Note that "aboveground part" indicates a part that is above the ground or water surface, and "underground part" indicates a part that is under the ground or water surface.

The plant growth regulator according to an embodiment of the present invention functions as an agent for increasing seed yield, an agent for increasing (elongating) plant height, an agent for increasing flower number, an agent for increasing aboveground part weight, or an agent for increasing underground part weight.

### (Applicable plant)

The plant growth regulator according to an embodiment of the present invention generally exhibits a growth promoting effect on all plants, and examples of applicable plants can include the following: Poaceae such as rice, wheat, barley, rye (triticale), oats, triticale, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, pepper, tomato, eggplant, potato, and tobacco; Polygonaceae such as buckwheat; Asteraceae such as sunflower; Araliaceae such as ginseng; Brassicaceae such as Arabidopsis thaliana, rapeseed, Chinese cabbage, turnip, cabbage, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry, Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

Other examples of the applicable plant include wild plants, cultivars, plants and cultivars bred by conventional hybridizing or plasmogamy, and genetically recombinant plants and cultivars obtained by gene manipulation. Examples of genetically recombined plants and cultivars include herbicide-tolerant crops, pest-resistant crops in which an insecticidal protein-producing gene has been recombined, pathogen-resistant crops in which a pathogen resistance derivative-producing gene has been recombined, taste-improved crops, yield-improved crops, preservation-improved crops, and yield-improved crops. Examples of genetically recombined cultivar that has been approved in each country include those stored in the database of the International Service for the Acquisition of Agri-biotech Applications (ISAAA). Specifically, there can be indicated those including registered trademarks such as: AgriSure, AgriSure 3000GT, AgriSure 3122 E-Z Refuge, AgriSure 3122 Refuge Renew, AgriSure Artesian 3030A, AgriSure Artesian 3011A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus and YieldGard VT Triple.

### (Other components and formulation of plant growth regulator)

The plant growth regulator according to an embodiment of the present invention may further contain other components in addition to the compound (I) and the component (A). For example, the compound (I) and the component (A) may be mixed with a carrier (diluent), a surfactant, and other formulation aids to form formulations in various forms such as dustable powders, granules, dust-granule mixtures, wettable powders, water soluble powders, emulsifiable concentrates, soluble concentrates, oil or oil miscible liquids, aerosols, microcapsules, pastes, liniments, smoke agents, fumigants, and ultra-low volume formulations.

Examples of the carrier to be used as a formulation aid include solid carriers and liquid carriers. Examples of the solid carrier can include those used as powder carriers and granular carriers, such as minerals such as clay, talc, diatomaceous earth, zeolite, montmorillonite, bentonite, kaolinite, kaolin, pyrophyllite, agalmatolite, acid clay, activated clay, attapulgite, attapulgite clay, limestone, calcite, marble, vermiculite, perlite, pumice, silica stone, silica sand, sericite and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cation gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide solvents such as dimethylformamide, N,N-dimethyloctaneamide, N,N-dimethyldecaneamide, 5-(dimethylamino)-2-methyl-5-oxo-valeric acid methyl ester, and N-acylmorpholine-based solvents (e.g., CAS No. 887947-29-7); and water.

Examples of the surfactant used as the formulation aid include nonionic surfactants, anionic surfactants, cationic surfactants, amphoteric surfactants, silicone surfactants, fluorosurfactants, and biosurfactants. Examples of the nonionic surfactants include sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkylphenyl ether, polyoxyethylene dialkyl phenyl ether, polyoxyethylene alkyl phenyl ether formalin condensate, polyoxyethylene/polyoxypropylene block polymer, alkyl polyoxyethylene/polyoxypropylene block polymer ether, alkyl phenyl polyoxyethylene/polyoxypropylene block polymer ether, polyoxyethylene alkylamine, polyoxyethylene fatty acid amide, polyoxyethylene fatty acid bisphenyl ether, polyoxyethylene benzylphenyl (or phenylphenyl) ether, polyoxyethylene styrylphenyl (or phenylphenyl) ether, polyoxyethylene castor oil, polyoxyethylene hydrogenated castor oil, and alkyl glycosides.

Examples of the anionic surfactants include sulfates such as alkyl sulfate, polyoxyethylene alkyl ether sulfate, polyoxyethylene alkylphenyl ether sulfate, polyoxyethylene benzyl (or styryl) phenyl (or phenylphenyl) ether sulfate, and polyoxyethylene/polyoxypropylene block polymer sulfate; sulfonates such as paraffin (alkane) sulfonate, α-olefin sulfonate, dialkyl sulfosuccinate, alkylbenzene sulfonate, mono- or dialkyl naphthalene sulfonate, naphthalene sulfonate-formalin condensate, alkyl diphenyl ether disulfonate, lignin sulfonate, polyoxyethylene alkyl phenyl ether sulfonate, and polyoxyethylene alkyl ether sulfosuccinic acid half ester; carboxylates such as fatty acids, resin acids, polycarboxylic acids, alkyl ether carboxylates, alkenyl succinic acids, N-acylamino acid, and naphthenic acid; and phosphates such as polyoxyethylene alkyl ether phosphate, polyoxyethylene mono- or dialkyl phenyl ether phosphate, polyoxyethylene benzyl (or styryl) phenyl (or phenylphenyl) ether phosphate, polyoxyethylene/polyoxypropylene block polymer phosphates, and alkyl phosphates.

Examples of the cationic surfactant include salts of amines such as alkylamines and alkyl pentamethyl propylene diamine; and salts of ammoniums such as alkyltrimethylammonium, methyl polyoxyethylene alkylammonium, alkyl pyridinium, mono- or di-alkyl methylated ammonium, alkyl dimethyl benzalkonium and benzethonium (octylphenoxyethoxyethyldimethylbenzylammonium).

Examples of the amphoteric surfactant include dialkyldiamino ethyl betaine, alkyldimethyl benzyl betaine, and lecithin (e.g., phosphatidylcholine and phosphatidylethanolamine).

Examples of the silicone surfactant include trisiloxane ethoxylate.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaritic acids, surfactins, serrawettins, viscosins, lichenysins, arthrofactins, emulsans, and alasans.

Examples of other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; sodium tripolyphosphate and sodium hexametaphosphate, which are used as disintegrating dispersants; 1,2-benzisothiazol-3-one, which is used as a preservative; sodium polyphosphate, sodium polyacrylate, sodium lignosulphonate, ethylene diamine tetraacetic acid and disodium and ammonium salts thereof, which are used as sequesterants; pigments and dyes used as colorants, fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and other adjuvants, chemical damage reducers and deterioration inhibitors.

### (Other active ingredients)

The plant growth regulator according to an embodiment of the present invention may be used in combination with other known active ingredients to enhance the performance as a plant growth regulator. Examples of the other known active ingredients include active ingredients contained in known plant growth regulators, fungicides, insecticides, miticides, nematicides, and herbicides. In the present specification, "used in combination with the other known active ingredients" means that the plant growth regulator according to an embodiment of the present invention and other known active ingredients are used separately. The plant growth regulator according to an embodiment of the present invention and the other known active ingredients may be used at the same timing or at different timings.

Examples of the known active ingredients of the plant growth regulator include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indole butyric acid, ethychlozate, chlormequat, choline, cyanamide, dichlorprop, decyl alcohol, sorbitan trioleate, nicosulfuron, pyraflufen-ethyl, butralin, prohydrojasmon, anisifluprin, and pendimethalin.

Examples of the active ingredients suitable for use in fungicides include nucleic acids metabolism inhibitors, fungicides acting on cytoskelton and motor proteins, respiration inhibitors, amino acids and protein synthesis inhibitors, signal transduction inhibitors, lipid synthesis or transport/membrane integrity or function inhibitors, cell membrane sterol biosynthesis inhibitors, cell wall biosynthesis inhibitors, melanin synthesis inhibitors, host plant defence inducers, chemical multi-site inhibitors, and biologicals with multiple modes of action.

Examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskelton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimethachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the cell membrane sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl-(2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl-2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defence inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphorous acid and salts thereof, and dichlobentiazox.

Examples of the chemical multi-site inhibitors include ferbam, mancozeb, maneb, metiram, propineb, thiram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper(II) hydroxide, copper hydroxide sulfate, copper sulfate, organocopper (oxine-copper), nonyl phenol sulfonic acid copper, DBEDC), sulfur, captan, captafol, folpet, chlorothalonil (TPN), quinoxaline (chinomethionat), fluoroimide, and methasulfocarb.

Examples of the biologicals with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1, Trichoderma asperellum strain T34, extracts from Swinglea glutinosa and extracts from the cotyledons of lupine plantlets (BLAD).

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelium mycelia extracts.

Examples of the active ingredients suitable for use in insecticides, miticides, and nematicides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of the proton gradient, nicotinic acetylcholine receptor (nAChR) channel blockers, inhibitors of chitin biosynthesis affecting CHS1, inhibitors of chitin biosynthesis (type 1), molting disruptors (Dipteran), ecdysone receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (d-cis-trans-allethrin, d-trans-allethrin), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, lepimectin, and milbemectin.

Examples of the juvenile hormone mimics include hydroprene, kinoprene, methoprene, fenoxycarb, and pyriproxyfen.

Examples of miscellaneous nonspecific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in B. t. crops (Cry1Ab, Cry1Ac, Cry1Fa, Cry1A. 105, Cry2Ab, Vip3A, mCry3A, Cry3Bb, and Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (Dipteran) include cyromazine.

Examples of the ecdysone receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella) GV, false codling moth (Thaumatotibia leucotreta) GV, velvetbean caterpillar (Anticarsis gemmatalis) MNPV, and cotton bollworm (Helicoverpa armigera) NPV.

Examples of other insecticides, miticides, and nematicides include azadirachtin, benzomate (benzoximate), phenisobromolate (bromopropylate), quinoxaline system (chinomethionate), kelthane (dicofol), lime sulfur, mancozeb, pyridalyl, sulfur, acynonapyr, amidoflumet, benzpyrimoxan, fluazaindolizine, fluensulfone, fluhexafon, flupentiofenox, flometoquin, metaldehyde, tyclopyrazoflor, dimpropyridaz, trifluenfuronate, indazapyroxamet, bacteria belonging to the genus Burkholderia spp., Wolbachia pipientis (Zap), Chenopodium ambrosioides near ambrosioides extracts, fatty acid monoesters with glycerol or propanediol, neem oil, machine oil, rapeseed oil, blended oils (safflower and cottonseed oil), starch, saccharified reduced starch, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of effective components suitable for herbicidal use include acetolactate synthase (ALS) inhibitor compounds, amino acid compounds, cyclohexanedione compounds, acetamide compounds, bipyridinium compounds, allyloxyphenoxypropionic acid compounds, carbamates compounds, pyridine compounds, urea compounds, dinitroaniline compounds, protoporphyrinogen oxidase (PPO) inhibitor compounds, phenoxyacetic acid compounds, hydroxyphenylpyruvate dioxygenase enzyme (HPPD) inhibitor compounds, and triazine compounds.

Examples of the acetolactate synthesis (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz-methyl, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid compounds include bialaphos and salts thereof, glufosinate and salts thereof, glufosinate P and salts thereof, and glyphosate and salts thereof.

Examples of the cyclohexanedione compounds include alloxydim, butroxydim, clethodim, cloproxydim, cycloxydim, profoxydim, sethoxydim, tepraloxydim, and tralkoxydim.

Examples of the acetamide compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium compounds include cyperquat, morfamquat, diquat, and paraquat.

Examples of the allyloxyphenoxypropionic acid compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid compound include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of other compounds for herbicidal use include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, tetrapion (flupropanate) and salts thereof, and d-limonene.

### [Method for promoting plant growth]

The plant growth regulator according to an embodiment of the present invention can be used, for example, in cultivated lands such as fields, paddy fields, lawns, and orchards or non-cultivated lands. The plant growth regulator according to an embodiment of the present invention can be used by all methods of fertilization, such as foliar application, mixing into water supply, spraying on soil, injecting into subsoil using an injector, seed treatment including treatment of bulbs and tubers, and direct fertilization to plants. Therefore, the method for promoting plant growth according to an embodiment of the present invention includes a procedure for fertilization using the above-described plant growth regulator.

In the case of application by mixing into water supply, for example, water is fed to the crop, or the water surface of a paddy field may be treated with granules or the like. In one example, the concentration of the compound (I) in the fed water is from 0.1 mg/L or greater and preferably 1 mg/L or greater. The quantity of the compound (I) used when administered to the paddy water surface is, for example, 0.1 g or greater, and preferably 1 g or greater, per 10 a of paddy field.

In the case of application by foliar application or spraying on soil, for example, a planting hole or the vicinity thereof may be treated with granules at the time of the transplantation of seedling, or seeds, plants, or the earth around plants may be treated with granules and a wettable powder. In addition, it may be preferable to mix with soil after spraying on the soil. The quantity of the compound (I) used for foliar application or spraying on a soil surface is, for example, 0.1 mg or greater, and preferably 1 mg or greater, per 1 m² of an agricultural or horticultural area.

In the case of application by seed treatment, the agent is applied to the seeds by mixing and stirring a wettable powder, a dustable powder and the like with the seeds or by dipping the seeds in a diluted wettable powder. Seed treatments also include seed coating treatments. The quantity of the compound (I) used in the case of seed treatment is, for example, 0.005 g or greater, and preferably 0.05 g or greater, per 100 kg of the seeds. Seeds treated with agricultural or horticultural chemicals can be used in the same way as common seeds.

Additionally, since the concentration and quantity used differ depending on the form of the agent, time of use, usage method, usage location, target crops and the like, they may be increased or decreased regardless of the above ranges.

### [Use of plant growth regulator]

The plant growth regulator according to an embodiment of the present invention exhibits an excellent growth promoting effect in treated plants, as described above. Therefore, the plant growth regulator according to an embodiment of the present invention can be used, for example, as a biostimulant. The plant growth regulator in this embodiment may also be mixed with fertilizers, soil conditioners, and pesticides for use.

In the present specification, the function of a "biostimulant" is primarily intended to act on plant physiology through a different pathway from fertilizers for the purpose of improving crop vitality, yield, and quality, and is different from the function of a "fertilizer". "Fertilizer" is "a material that is applied to soil cultivation or water cultivation to supply nutrients to plants" and is a material that supplements nutrients required for a plant. In a case where a plant is malnourished, supply of fertilizers has an effect of improving the nutritional state of the plant; however, in a case where the nutrient of the plant is sufficient to a certain degree, this effect cannot be expected.

### [Plant growth regulating product]

The plant growth regulator according to an embodiment of the present invention may be prepared by separately providing a preparation agent containing the compound (I) and a preparation agent containing the component (A) and mixing them. Therefore, a plant growth regulating product containing the compound (I) and the component (A) separately, which are to be mixed for use as a combination preparation in plant growth regulation, is also included in an embodiment of the present invention.

### [Summary]

A plant growth regulator according to Embodiment 1 of the present invention includes:
a compound represented by Formula (I) below or its tautomer, or an agrochemically acceptable salt thereof; and
at least one component selected from the group consisting of an amino acid, a 2 or more and 10 or less amino-acid-long peptide, a betaine, an organic acid or a salt thereof, a nucleobase, a vitamin, and a sugar or a sugar alcohol: 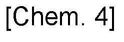 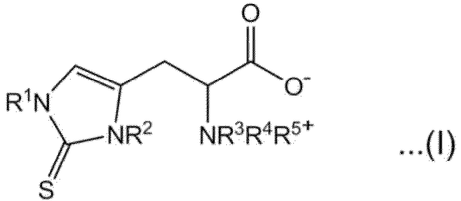
where in Formula (I), R¹ and R² each independently represent a hydrogen atom or an alkyl group having from 1 to 4 carbons, and R³ to R⁵ each independently represent an alkyl group having from 1 to 4 carbons.

A plant growth regulator according to Embodiment 2 of the present invention is the plant growth regulator of Embodiment 1, in which the compound represented by Formula (I) is ergothioneine.

A plant growth regulator according to Embodiment 3 of the present invention is the plant growth regulator according to Embodiment 1 or 2, in which the amino acid is at least one amino acid selected from the group consisting of glutamic acid, aspartic acid, arginine, lysine, glycine, alanine, valine, leucine, threonine, phenylalanine, tyrosine, tryptophan, proline, serine, glutamine, asparagine, methionine, histidine, cysteine, γ-aminobutyric acid, 5-aminolevulinic acid and ornithine.

A plant growth regulator according to Embodiment 4 of the present invention is the plant growth regulator according to any one of Embodiments 1 to 3, in which the peptide is glutathione.

A plant growth regulator according to Embodiment 5 of the present invention is the plant growth regulator according to any one of Embodiments 1 to 4, in which the betaine is at least one betaine selected from the group consisting of an N-alkyl-substituted amino acid and carnitine.

A plant growth regulator according to Embodiment 6 of the present invention is the plant growth regulator according to Embodiment 5, in which the N-alkyl-substituted amino acid is glycine betaine.

A plant growth regulator according to Embodiment 7 of the present invention is the plant growth regulator according to any one of Embodiments 1 to 6, in which the organic acid is a carboxylic acid having 1 or more and 10 or less carbons.

A plant growth regulator according to Embodiment 8 of the present invention is the plant growth regulator according to any one of Embodiments 1 to 7, in which the organic acid is at least one organic acid selected from the group consisting of acetic acid, citric acid and maleic acid.

A plant growth regulator according to Embodiment 9 of the present invention is the plant growth regulator according to any one of Embodiments 1 to 8, in which the nucleobase is at least one nucleobase selected from the group consisting of guanine, thymine and uracil.

A plant growth regulator according to Embodiment 10 of the present invention is the plant growth regulator according to any one of Embodiments 1 to 9, in which the vitamin is at least one vitamin selected from the group consisting of vitamin B1 and vitamin D2.

A plant growth regulator according to Embodiment 11 of the present invention is the plant growth regulator according to any one of Embodiments 1 to 10, in which the sugar or sugar alcohol is at least one sugar or sugar alcohol selected from the group consisting of trehalose and inositol.

A plant growth regulator according to Embodiment 12 of the present invention is the plant growth regulator according to any one of Embodiments 1 to 11, which is an agent for increasing seed yield, an agent for increasing plant height, an agent for increasing flower number, an agent for increasing aboveground part weight, or an agent for increasing underground part weight.

A method for promoting plant growth according to Embodiment 13 of the present invention includes treating a plant with the plant growth regulator described in any one of Embodiments 1 to 12.

A plant growth regulating product according to Embodiment 14 of the present invention is a plant growth regulating product for preparing the plant growth regulator described in any one of Embodiments 1 to 12, the plant growth regulating product containing, as a combination preparation which is to be mixed for use: the compound represented by Formula (I) or its tautomer, or agrochemically acceptable salt thereof, and the at least one component, separately.

Embodiments of the present invention will be further described in detail using the examples below. The present invention is not limited to the examples below, and it goes without saying that various aspects are possible with regard to the details thereof. Furthermore, the present invention is not limited to the embodiments described above, and it may be varied in various ways within the scope of the claims. Thus, an embodiment achieved by appropriately combining technical means described herein will be included in the technical scope of the present invention. In addition, the contents of all the literatures referred herein are incorporated herein by reference in their entirety.

### [Examples]

In the following Examples, the symbol "%" represents % by mass, unless otherwise indicated. In addition, L-(+)-ergothioneine may be abbreviated as "EGT", L-glutamic acid as "Glu", L-histidine as "His", L-arginine as "Arg", L-lysine as "Lys", L-valine as "Val", L-leucine as "Leu", L-phenylalanine as "Phe", L-tyrosine as "Tyr", L-tryptophan as "Trp", L-serine as "Ser", L-glutamine as "Gln", L-asparagine as "Asn", L-cysteine as "Cys", L-methionine as "Met", glycine betaine as "GB", oxidized glutathione as "GSSG", γ -aminobutyric acid as "GABA", and 5-aminolevulinic acid as "5-ALA".

### Evaluation Example 1: Comparison of seed yield of Arabidopsis thaliana

The plant growth regulators of Examples 1 and 2 and Comparative Examples 1 to 3 were prepared so as to attain the concentrations indicated in Table 1 below. EGT, Glu and Arg were commercially available products, and pure water was used as a solvent.

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a growth chamber set at room temperature of 22°C, the light period was 16 hours and the dark period was 8 hours. The light conditions were set such that the light intensity was 5000 Ix in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

On the 89th day after seeding, seeds were harvested, and the seed yield was evaluated. The evaluation results are indicated in Table 1. "Untreated control" in the table is only pure water. "Theoretical value at mixing" is a theoretical value obtained by multiplying a ratio of each component (A) to untreated control by a ratio of EGT to untreated control.

**[Table 1]**

| | Component (A) | | EGT | Seed yield | |
|---|---|---|---|---|---|
| | Component name | mM | mM | Ratio to untreated control | Theoretical value at mixing |
| Example 1 | Glu | 2.5 | 1 | 1.3 | 1.2 |
| Example 2 | Arg | 0.1 | 1 | 1.7 | 1.3 |
| Comparative Example 1 | Glu | 2.5 | - | 1.0 | - |
| Comparative Example 2 | Arg | 0.1 | - | 1.1 | - |
| Comparative Example 3 | - | - | 1 | 1.2 | - |
| Untreated control | - | - | - | 1.0 | - |

As indicated in Table 1, the plant growth regulators of Examples 1 and 2 exhibited higher seed yields and better plant growth promoting effects than those of the plant growth regulators containing only Glu or Arg (Comparative Examples 1 and 2) and the plant growth regulator containing only EGT (Comparative Example 3). In addition, the seed yields of the plant growth regulators of Examples 1 and 2 were larger than the theoretical value at mixing, and synergistic effects were confirmed.

### Evaluation Example 2: Comparison of seed yield of Arabidopsis thaliana

The plant growth regulators of Examples 3 to 5 and Comparative Examples 4 to 7 were prepared so as to attain the concentrations indicated in Table 2 below. EGT, citric acid, GB and GSSG were commercially available products, and pure water was used as a solvent.

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a growth chamber set at room temperature of 22°C, the light period was 16 hours and the dark period was 8 hours. The light conditions were set such that the light intensity was 5000 Ix in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

On the 89th day after seeding, seeds were harvested, and the seed yield was evaluated. The evaluation results are indicated in Table 2.

**[Table 2]**

| | Component (A) | | EGT | Seed yield | |
|---|---|---|---|---|---|
| | Component name | mM | mM | Ratio to untreated control | Theoretical value at mixing |
| Example 3 | Citric acid | 0.1 | 1 | 1.3 | 1.0 |
| Example 4 | GB | 0.1 | 1 | 1.6 | 1.2 |
| Example 5 | GSSG | 0.1 | 1 | 1.5 | 1.3 |
| Comparative Example 4 | - | - | 1 | 1.2 | - |
| Comparative Example 5 | Citric acid | 0.1 | - | 0.8 | - |
| Comparative Example 6 | GB | 0.1 | - | 1.0 | - |
| Comparative Example 7 | GSSG | 0.1 | - | 1.1 | - |
| Untreated control | - | - | - | 1.0 | - |

As indicated in Table 2, the plant growth regulators of Examples 3 to 5 exhibited higher seed yields and better plant growth promoting effects than those of the plant growth regulators containing only citric acid, GB or GSSG (Comparative Examples 5 to 7) and the plant growth regulator containing only EGT (Comparative Example 4). In addition, the seed yields of the plant growth regulators of Examples 3 to 5 were larger than the theoretical value at mixing, and synergistic effects were confirmed.

### Evaluation Example 3: Comparison of elongated plant height of rapeseed

The plant growth regulators of Example 6 and Comparative Examples 8 and 9 were prepared so as to attain the concentrations indicated in Table 3 below. EGT and Arg were commercially available products, and pure water was used as a solvent.

Into a 9 cm petri dish on which filter paper was spread, 5 mL of the plant growth regulator was added. Seven seeds of rapeseed were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the rapeseed on the 7th day after seeding was evaluated. The evaluation results are indicated in Table 3.

**[Table 3]**

| | Component (A) | | EGT | Elongated plant height | |
|---|---|---|---|---|---|
| | Component name | mM | mM | Ratio to untreated control | Theoretical value at mixing |
| Example 6 | Arg | 1 | 1 | 1.3 | 1.1 |
| Comparative Example 8 | - | - | 1 | 1.2 | - |
| Comparative Example 9 | Arg | 1 | - | 0.9 | - |
| Untreated control | - | - | - | 1.0 | - |

As indicated in Table 3, the plant growth regulator of Example 6 exhibited an elongated plant height and an excellent plant growth promoting effect as compared with those of the plant growth regulator containing only Arg (Comparative Example 9) and the plant growth regulator containing only EGT (Comparative Example 8). In addition, the elongated plant height of the plant growth regulator of Example 6 was greater than the theoretical value at mixing, and synergistic effects were confirmed.

### Evaluation Example 4: Comparison of elongated plant height of rapeseed

The plant growth regulators of Examples 7 and 8 and Comparative Examples 10 to 12 were prepared so as to attain the concentrations indicated in Table 4 below. EGT, Asn and Lys were commercially available products, and pure water was used as a solvent.

Into a 9 cm petri dish on which filter paper was spread, 5 mL of the plant growth regulator was added. Ten seeds of rapeseed were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the rapeseed on the 7th day after seeding was evaluated. The evaluation results are indicated in Table 4.

**[Table 4]**

| | Component (A) | | EGT | Elongated plant height | |
|---|---|---|---|---|---|
| | Component name | mM | mM | Ratio to untreated control | Theoretical value at mixing |
| Example 7 | Asn | 1 | 1 | 1.3 | 1.2 |
| Example 8 | Lys | 1 | 1 | 1.2 | 0.7 |
| Comparative Example 10 | - | - | 1 | 1.1 | - |
| Comparative Example 11 | Asn | 1 | - | 1.1 | - |
| Comparative Example 12 | Lys | 1 | - | 0.6 | - |
| Untreated control | - | - | - | 1.0 | - |

As indicated in Table 4, the plant growth regulators of Examples 7 and 8 exhibited elongated plant heights and excellent plant growth promoting effects as compared with those of the plant growth regulators containing only Asn or Lys (Comparative Examples 11 and 12) and the plant growth regulator containing only EGT (Comparative Example 10). In addition, the elongated plant heights of the plant growth regulators of Examples 7 and 8 were greater than the theoretical value at mixing, and synergistic effects were confirmed.

### Evaluation Example 5: Comparison of elongated plant height of rapeseed

The plant growth regulators of Examples 9 to 13 and Comparative Examples 13 to 18 were prepared so as to attain the concentrations indicated in Table 5 below. EGT, Gln, Trp, Met, Phe and acetic acid were commercially available products, and pure water was used as a solvent.

Into a 9 cm petri dish on which filter paper was spread, 5 mL of the plant growth regulator was added. Ten seeds of rapeseed were sown per one petri dish. In a growth chamber set at room temperature of 25°C, the light period was 16 hours and the dark period was 8 hours. The light conditions were set such that the light intensity was 5000 Ix in the central part under irradiation with the fluorescent lamp.

The plant height of the rapeseed on the 7th day after seeding was evaluated. The evaluation results are indicated in Table 5.

**[Table 5]**

| | Component (A) | | EGT | Elongated plant height | |
|---|---|---|---|---|---|
| | Component name | mM | mM | Ratio to untreated control | Theoretical value at mixing |
| Example 9 | Gln | 0.5 | 0.5 | 1.3 | 1.2 |
| Example 10 | Trp | 0.5 | 0.5 | 1.4 | 0.6 |
| Example 11 | Met | 0.5 | 0.5 | 1.2 | 1.1 |
| Example 12 | Phe | 0.5 | 0.5 | 1.4 | 1.2 |
| Example 13 | Acetic acid | 0.5 | 0.5 | 1.3 | 1.2 |
| Comparative Example 13 | - | - | 0.5 | 1.1 | - |
| Comparative Example 14 | Gln | 0.5 | - | 1.1 | - |
| Comparative Example 15 | Trp | 0.5 | - | 0.5 | - |
| Comparative Example 16 | Met | 0.5 | - | 1.0 | - |
| Comparative Example 17 | Phe | 0.5 | - | 1.1 | - |
| Comparative Example 18 | Acetic acid | 0.5 | - | 1.1 | - |
| Untreated control | - | - | - | 1.0 | - |

As indicated in Table 5, the plant growth regulators of Examples 9 to 13 exhibited elongated plant heights and excellent plant growth promoting effects as compared with those of the plant growth regulators containing only Gln, Trp, Met, Phe or acetic acid (Comparative Examples 14 to 18) and the plant growth regulator containing only EGT (Comparative Example 13). In addition, the elongated plant heights of the plant growth regulators of Examples 9 to 13 were greater than the theoretical value at mixing, and synergistic effects were confirmed.

### Evaluation Example 6: Comparison of elongated plant height of rapeseed

The plant growth regulators of Examples 14 to 17 and Comparative Examples 19 to 23 were prepared so as to attain the concentrations indicated in Table 6 below. EGT, Leu, Val, Tyr and Ser were commercially available products, and pure water was used as a solvent.

Into a 9 cm petri dish on which filter paper was spread, 5 mL of the plant growth regulator was added. Ten seeds of rapeseed were sown per one petri dish. In a growth chamber set at room temperature of 25°C, the light period was 16 hours and the dark period was 8 hours. The light conditions were set such that the light intensity was 5000 Ix in the central part under irradiation with the fluorescent lamp.

The plant height of the rapeseed on the 7th day after seeding was evaluated. The evaluation results are indicated in Table 6.

**[Table 6]**

| | Component (A) | | EGT | Elongated plant height | |
|---|---|---|---|---|---|
| | Component name | mM | mM | Ratio to untreated control | Theoretical value at mixing |
| Example 14 | Leu | 0.5 | 0.5 | 1.2 | 1.1 |
| Example 15 | Val | 0.5 | 0.5 | 1.2 | 1.1 |
| Example 16 | Tyr | 0.5 | 0.5 | 1.2 | 1.1 |
| Example 17 | Ser | 0.5 | 0.5 | 1.2 | 1.1 |
| Comparative Example 19 | - | - | 0.5 | 1.1 | - |
| Comparative Example 20 | Leu | 0.5 | - | 1.0 | - |
| Comparative Example 21 | Val | 0.5 | - | 1.0 | - |
| Comparative Example 22 | Tyr | 0.5 | - | 1.0 | - |
| Comparative Example 23 | Ser | 0.5 | - | 1.0 | - |
| Untreated control | - | - | - | 1.0 | - |

As indicated in Table 6, the plant growth regulators of Examples 14 to 17 exhibited elongated plant heights and excellent plant growth promoting effects as compared with those of the plant growth regulators containing only Leu, Val, Tyr, or Ser (Comparative Examples 20 to 23) and the plant growth regulator containing only EGT (Comparative Example 19). In addition, the elongated plant heights of the plant growth regulators of Examples 14 to 17 were greater than the theoretical value at mixing, and synergistic effects were confirmed.

### Evaluation Example 7: Comparison of elongated plant height of rapeseed

The plant growth regulators of Example 18 and Comparative Examples 24 and 25 were prepared so as to attain the concentrations indicated in Table 7 below. EGT and uracil were commercially available products, and pure water was used as a solvent.

Into a 9 cm petri dish on which filter paper was spread, 5 mL of the plant growth regulator was added. Ten seeds of rapeseed were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the rapeseed on the 7th day after seeding was evaluated. The evaluation results are indicated in Table 7.

**[Table 7]**

| | Component (A) | | EGT | Elongated plant height | |
|---|---|---|---|---|---|
| | Component name | mM | mM | Ratio to untreated control | Theoretical value at mixing |
| Example 18 | Uracil | 0.5 | 0.5 | 1.2 | 1.1 |
| Comparative Example 24 | - | - | 0.5 | 1.1 | - |
| Comparative Example 25 | Uracil | 0.5 | - | 1.0 | - |
| Untreated control | - | - | - | 1.0 | - |

As indicated in Table 7, the plant growth regulator of Example 18 exhibited an elongated plant height and an excellent plant growth promoting effect as compared with those of the plant growth regulator containing only uracil (Comparative Example 25) and the plant growth regulator containing only EGT (Comparative Example 24). In addition, the elongated plant height of the plant growth regulator of Example 18 was greater than the theoretical value at mixing, and synergistic effects were confirmed.

### Evaluation Example 8: Comparison of elongated plant height of wheat

The plant growth regulators of Examples 19 and 20 and Comparative Examples 26 to 28 were prepared so as to attain the concentrations indicated in Table 8 below. EGT, guanine and thymine were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 8.

**[Table 8]**

| | Component (A) | | EGT | Elongated plant height | |
|---|---|---|---|---|---|
| | Component name | mM | mM | Ratio to untreated control | Theoretical value at mixing |
| Example 19 | Guanine | 0.5 | 0.5 | 1.2 | 1.0 |
| Example 20 | Thymine | 0.5 | 0.5 | 1.2 | 1.0 |
| Comparative Example 26 | - | - | 0.5 | 1.1 | - |
| Comparative Example 27 | Guanine | 0.5 | - | 0.9 | - |
| Comparative Example 28 | Thymine | 0.5 | - | 0.9 | - |
| Untreated control | - | - | - | 1.0 | - |

As indicated in Table 8, the plant growth regulators of Examples 19 and 20 exhibited elongated plant heights and excellent plant growth promoting effects as compared with those of the plant growth regulators containing only guanine or thymine (Comparative Examples 27 and 28) and the plant growth regulator containing only EGT (Comparative Example 26). In addition, the elongated plant heights of the plant growth regulators of Examples 19 and 20 were greater than the theoretical value at mixing, and synergistic effects were confirmed.

### Evaluation Example 9: Comparison of elongated plant height of wheat

The plant growth regulators of Examples 21 and 22 and Comparative Examples 29 to 31 were prepared so as to attain the concentrations indicated in Table 9 below. EGT, trehalose and inositol were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 9.

**[Table 9]**

| | Component (A) | | EGT | Elongated plant height | |
|---|---|---|---|---|---|
| | Component name | mM | mM | Ratio to untreated control | Theoretical value at mixing |
| Example 21 | Trehalose | 0.5 | 0.5 | 1.2 | 1.1 |
| Example 22 | Inositol | 0.5 | 0.5 | 1.2 | 1.0 |
| Comparative Example 29 | - | - | 0.5 | 1.1 | - |
| Comparative Example 30 | Trehalose | 0.5 | - | 1.0 | - |
| Comparative Example 31 | Inositol | 0.5 | - | 0.9 | - |
| Untreated control | - | - | - | 1.0 | - |

As indicated in Table 9, the plant growth regulators of Examples 21 and 22 exhibited elongated plant heights and excellent plant growth promoting effects as compared with those of the plant growth regulators containing only trehalose or inositol (Comparative Examples 30 and 31) and the plant growth regulator containing only EGT (Comparative Example 29). In addition, the elongated plant heights of the plant growth regulators of Examples 21 and 22 were greater than the theoretical value at mixing, and synergistic effects were confirmed.

### Evaluation Example 10: Comparison of elongated plant height of wheat

The plant growth regulators of Examples 23 to 26 and Comparative Examples 32 to 36 were prepared so as to attain the concentrations indicated in Table 10 below. EGT, GABA, ornithine, carnitine and maleic acid were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 10.

**[Table 10]**

| | Component (A) | | EGT | Elongated plant height | |
|---|---|---|---|---|---|
| | Component name | mM | mM | Ratio to untreated control | Theoretical value at mixing |
| Example 23 | GABA | 0.5 | 0.5 | 1.2 | 1.1 |
| Example 24 | Ornithine | 0.5 | 0.5 | 1.2 | 1.0 |
| Example 25 | Carnitine | 0.5 | 0.5 | 1.2 | 1.0 |
| Example 26 | Maleic acid | 0.5 | 0.5 | 1.2 | 1.0 |
| Comparative Example 32 | - | - | 0.5 | 1.1 | - |
| Comparative Example 33 | GABA | 0.5 | - | 1.0 | - |
| Comparative Example 34 | Ornithine | 0.5 | - | 0.9 | - |
| Comparative Example 35 | Carnitine | 0.5 | - | 0.9 | - |
| Comparative Example 36 | Maleic acid | 0.5 | - | 0.9 | - |
| Untreated control | - | - | - | 1.0 | - |

As indicated in Table 10, the plant growth regulators of Examples 23 to 26 exhibited elongated plant heights and excellent plant growth promoting effects as compared with those of the plant growth regulators containing only GABA, ornithine, carnitine or maleic acid (Comparative Examples 33 to 36) and the plant growth regulator containing only EGT (Comparative Example 32). In addition, the elongated plant heights of the plant growth regulators of Examples 23 to 26 were greater than the theoretical value at mixing, and synergistic effects were confirmed.

### Evaluation Example 11: Comparison of elongated plant height of wheat

The plant growth regulators of Examples 27 to 31 and Comparative Examples 37 to 42 were prepared so as to attain the concentrations indicated in Table 11 below. EGT, Met, His, Cys, 5-ALA and vitamin D2 were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 11.

**[Table 11]**

| | Component (A) | | EGT | Elongated plant height | |
|---|---|---|---|---|---|
| | Component name | mM | mM | Ratio to untreated control | Theoretical value at mixing |
| Example 27 | Met | 0.1 | 0.5 | 1.3 | 0.9 |
| Example 28 | His | 0.1 | 0.5 | 1.3 | 1.1 |
| Example 29 | Cys | 0.1 | 0.5 | 1.2 | 1.1 |
| Example 30 | 5-ALA | 0.1 | 0.5 | 1.4 | 1.0 |
| Example 31 | Vitamin D2 | 0.01 | 0.5 | 1.2 | 1.0 |
| Comparative Example 37 | - | - | 0.5 | 1.1 | - |
| Comparative Example 38 | Met | 0.1 | - | 0.8 | - |
| Comparative Example 39 | His | 0.1 | - | 1.0 | - |
| Comparative Example 40 | Cys | 0.1 | - | 1.0 | - |
| Comparative Example 41 | 5-ALA | 0.1 | - | 0.9 | - |
| Comparative Example 42 | Vitamin D2 | 0.01 | - | 0.9 | - |
| Untreated control | - | - | - | 1.0 | - |

As indicated in Table 11, the plant growth regulators of Examples 27 to 31 exhibited elongated plant heights and excellent plant growth promoting effects as compared with those of the plant growth regulators containing only Met, His, Cys, 5-ALA or vitamin D2 (Comparative Examples 38 to 42) and the plant growth regulator containing only EGT (Comparative Example 37). In addition, the elongated plant heights of the plant growth regulators of Examples 27 to 31 were greater than the theoretical value at mixing, and synergistic effects were confirmed.

### Evaluation Example 12: Comparison of number of flowers and buds of tomato

The plant growth regulators of Examples 32 and 33 and Comparative Examples 43 to 45 were prepared so as to attain the concentrations indicated in Table 12 below. EGT, Arg and Glu were commercially available products, and pure water was used as a solvent.

In a plastic pot having a diameter of 135 mm and a height of 110 mm, 1 kg of granular soil (Kumiai horticultural soil) was placed, and one individual tomato (Micro Tom) was sown per one pot.

The tomato was managed in a greenhouse set at room temperature of 25°C. Chemical treatment was started 5 weeks after seeding. More specifically, on the 32nd, 34th, and 36th days after seeding, 50 mL of the plant growth regulator was added.

On the 83rd day after seeding, the number of flowers and buds was evaluated. The evaluation results are indicated in Table 12.

**[Table 12]**

| | Component (A) | | EGT | Total number of flowers and buds | |
|---|---|---|---|---|---|
| | Component name | mM | mM | Ratio to untreated control | Theoretical value at mixing |
| Example 32 | Arg | 0.1 | 0.1 | 1.2 | 1.1 |
| Example 33 | Glu | 0.1 | 0.1 | 1.5 | 1.1 |
| Comparative Example 43 | - | - | 0.1 | 1.1 | - |
| Comparative Example 44 | Arg | 0.1 | - | 1.0 | - |
| Comparative Example 45 | Glu | 0.1 | - | 1.0 | - |
| Untreated control | - | - | - | 1.0 | - |

As indicated in Table 12, the plant growth regulators of Examples 32 and 33 exhibited greater total numbers of flowers and buds and better plant growth promoting effects than those of the plant growth regulators containing only Arg or Glu (Comparative Examples 44 and 45) and the plant growth regulator containing only EGT (Comparative Example 43). In addition, the total numbers of flowers and buds of the plant growth regulators of Examples 32 and 33 were greater than the theoretical value at mixing, and synergistic effects were confirmed.

### Evaluation Example 13: Comparison of aboveground part weight and underground part weight of radish

The plant growth regulators of Example 34 and Comparative Examples 46 and 47 were prepared so as to attain the concentrations indicated in Table 13 below. EGT and Glu were commercially available products, and pure water was used as a solvent.

In a plastic pot having a diameter of 105 mm and a height of 90 mm, 450 g of granular soil (Kumiai horticultural soil) was placed, and one individual radish (Akamaru Hatsuka) was sown per one pot.

The radish was managed in a greenhouse set at room temperature of 25°C. Chemical treatment was started 2 weeks after seeding. More specifically, on the 15th, 17th, and 20th days after seeding, 50 mL of the plant growth regulator was added.

On the 27th day after seeding, the aboveground part weight and underground part weight were evaluated. The evaluation results are indicated in Table 13.

**[Table 13]**

| | Component (A) | | EGT | Aboveground part weight | | Underground part weight | |
|---|---|---|---|---|---|---|---|
| | Component name | mM | mM | Ratio to untreated control | Theoretical value at mixing | Ratio to untreated control | Theoretical value at mixing |
| Example 34 | Glu | 0.5 | 0.5 | 1.3 | 1.2 | 1.4 | 1.2 |
| Comparative Example 46 | - | - | 0.5 | 1.1 | - | 1.1 | - |
| Comparative Example 47 | Glu | 0.5 | - | 1.1 | - | 1.1 | - |
| Untreated control | - | - | - | 1.0 | - | 1.0 | - |

As indicated in Table 13, the plant growth regulator of Example 34 exhibited greater aboveground part weight and underground part weight and better plant growth promoting effects than those of the plant growth regulator containing only Glu (Comparative Example 47) and the plant growth regulator containing only EGT (Comparative Example 46). In addition, the aboveground part weight and underground part weight of the plant growth regulator of Example 34 were greater than the theoretical values at mixing, and synergistic effects were confirmed.

### Evaluation Example 14: Comparison of number of fruits and total fruit weight of tomato

The plant growth regulators of Example 35 and Comparative Examples 48 and 49 were prepared so as to attain the concentrations indicated in Table 14 below. EGT and Arg were commercially available products, and pure water was used as a solvent.

In a plastic pot having a diameter of 135 mm and a height of 110 mm, 1 kg of granular soil (Kumiai horticultural soil) was placed, and one individual tomato (Regina) was sown per one pot.

The tomatowas managed in a greenhouse set at room temperature of 25°C. Chemical treatment was started 5 weeks after seeding. More specifically, on the 32nd, 34th, and 36th days after seeding, 50 mL of the plant growth regulator was added.

On the 75th day after seeding, fruits having a diameter of 20 mm or greater were collected, and the number and total weight of the collected fruits were evaluated. The evaluation results are indicated in Table 14.

**[Table 14]**

| | Component (A) | | EGT | Number of fruits | | Total fruit weight | |
|---|---|---|---|---|---|---|---|
| | Component name | mM | mM | Ratio to untreated control | Theoretical value at mixing | Ratio to untreated control | Theoretical value at mixing |
| Example 35 | Arg | 0.1 | 0.1 | 1.4 | 1.2 | 1.3 | 1.1 |
| Comparative Example 48 | - | - | 0.1 | 1.2 | - | 1.2 | - |
| Comparative Example 49 | Arg | 0.1 | - | 1.0 | - | 0.9 | - |
| Untreated control | - | - | - | 1.0 | - | 1.0 | - |

As indicated in Table 14, the plant growth regulator of Example 35 exhibited greater number of fruits and total fruit weight and a better plant growth promoting effect than those of the plant growth regulator containing only Arg (Comparative Example 49) and the plant growth regulator containing only EGT (Comparative Example 48). In addition, the number of fruits and total fruit weight of the plant growth regulator of Example 35 were greater than the theoretical values at mixing, and synergistic effects were confirmed.

### Evaluation Example 15: Comparison of elongated plant height of wheat

The plant growth regulators of Example 36 and Comparative Examples 50 and 51 were prepared so as to attain the concentrations indicated in Table 15 below. EGT and carnitine were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 15.

**[Table 15]**

| | Component (A) | | EGT | Elongated plant height | |
|---|---|---|---|---|---|
| | Component name | mM | mM | Ratio to untreated control | Theoretical value at mixing |
| Example 36 | Carnitine | 10 | 1 | 1.2 | 1.1 |
| Comparative Example 50 | - | - | 1 | 1.1 | - |
| Comparative Example 51 | Carnitine | 10 | - | 1.0 | - |
| Untreated control | - | - | - | 1.0 | - |

As indicated in Table 15, the plant growth regulator of Example 36 exhibited an elongated plant height and an excellent plant growth promoting effect as compared with those of the plant growth regulator containing only carnitine (Comparative Example 51) and the plant growth regulator containing only EGT (Comparative Example 50). In addition, the elongated plant height of the plant growth regulator of Example 36 was greater than the theoretical value at mixing, and synergistic effects were confirmed.

### Evaluation Example 16: Comparison of elongated plant height of wheat

The plant growth regulators of Examples 37 and 38 and Comparative Examples 52 to 54 were prepared so as to attain the concentrations indicated in Table 16 below. EGT and trehalose were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 16.

**[Table 16]**

| | Component (A) | | EGT | Elongated plant height | |
|---|---|---|---|---|---|
| | Component name | mM | mM | Ratio to untreated control | Theoretical value at mixing |
| Example 37 | Trehalose | 0.01 | 1 | 1.4 | 1.1 |
| Example 38 | Trehalose | 0.1 | 1 | 1.3 | 1.0 |
| Comparative Example 52 | - | - | 1 | 1.1 | - |
| Comparative Example 53 | Trehalose | 0.01 | - | 1.0 | - |
| Comparative Example 54 | Trehalose | 0.1 | - | 0.9 | - |
| Untreated control | - | - | - | 1.0 | - |

As indicated in Table 16, the plant growth regulators of Examples 37 and 38 exhibited elongated plant heights and excellent plant growth promoting effects as compared with those of the plant growth regulators containing only trehalose (Comparative Examples 53 and 54) and the plant growth regulator containing only EGT (Comparative Example 52). In addition, the elongated plant heights of the plant growth regulators of Examples 37 and 38 were greater than the theoretical value at mixing, and synergistic effects were confirmed.

### Evaluation Example 17: Comparison of elongated plant height of wheat

The plant growth regulators of Examples 39 to 41 and Comparative Examples 55 to 58 were prepared so as to attain the concentrations indicated in Table 17 below. EGT and uracil were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 17.

**[Table 17]**

| | Component (A) | | EGT | Elongated plant height | |
|---|---|---|---|---|---|
| | Compone nt name | mM | mM | Ratio to untreated control | Theoretical value at mixing |
| Example 39 | Uracil | 0.01 | 1 | 1.3 | 1.2 |
| Example 40 | Uracil | 0.1 | 1 | 1.2 | 1.1 |
| Example 41 | Uracil | 10 | 1 | 1.2 | 1.1 |
| Comparative Example 55 | - | - | 1 | 1.1 | - |
| Comparative Example 56 | Uracil | 0.01 | - | 1.1 | - |
| Comparative Example 57 | Uracil | 0.1 | - | 1.0 | - |
| Comparative Example 58 | Uracil | 10 | - | 1.0 | - |
| Untreated control | - | - | - | 1.0 | - |

As indicated in Table 17, the plant growth regulators of Examples 39 to 41 exhibited elongated plant heights and excellent plant growth promoting effects as compared with those of the plant growth regulators containing only uracil (Comparative Examples 56 to 58) and the plant growth regulator containing only EGT (Comparative Example 55). In addition, the elongated plant heights of the plant growth regulators of Examples 39 to 41 were greater than the theoretical value at mixing, and synergistic effects were confirmed.

### Evaluation Example 18: Comparison of elongated plant height of wheat

The plant growth regulators of Examples 42 to 49 and Comparative Examples 59 to 67 were prepared so as to attain the concentrations indicated in Table 18 below. EGT, Cys, GSSG, GB, vitamin B1 and inositol were commercially available products, and pure water was used as a solvent.

Into a 9 cm petri dish on which filter paper was spread, 5 mL of the plant growth regulator was added. Ten seeds of wheat were sown per one petri dish. In a thermostatic chamber set at room temperature of 24°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 Ix in the central part under irradiation with the fluorescent lamp.

The plant height of the wheat on the 7th day after seeding was evaluated. The evaluation results are indicated in Table 18.

**[Table 18]**

| | Component (A) | | EGT | Elongated plant height | |
|---|---|---|---|---|---|
| | Component name | mM | mM | Ratio to untreated control | Theoretical value at mixing |
| Example 42 | Cys | 0.01 | 1 | 1.2 | 1.1 |
| Example 43 | Cys | 10 | 1 | 1.2 | 1.1 |
| Example 44 | GSSG | 0.01 | 1 | 1.2 | 1.0 |
| Example 45 | GSSG | 1 | 1 | 1.2 | 1.1 |
| Example 46 | GB | 0.01 | 1 | 1.2 | 1.1 |
| Example 47 | Vitamin B1 | 0.01 | 1 | 1.2 | 1.1 |
| Example 48 | Vitamin B1 | 0.1 | 1 | 1.4 | 1.2 |
| Example 49 | Inositol | 10 | 1 | 1.2 | 1.1 |
| Comparative Example 59 | - | - | 1 | 1.1 | - |
| Comparative Example 60 | Cys | 0.01 | - | 1.0 | - |
| Comparative Example 61 | Cys | 10 | - | 1.0 | - |
| Comparative Example 62 | GSSG | 0.01 | - | 0.9 | - |
| Comparative Example 63 | GSSG | 0.1 | - | 1.0 | - |
| Comparative Example 64 | GB | 0.01 | - | 1.0 | - |
| Comparative Example 65 | Vitamin B1 | 0.01 | - | 1.0 | - |
| Comparative Example 66 | Vitamin B1 | 0.1 | - | 1.1 | - |
| Comparative Example 67 | Inositol | 10 | - | 1.0 | - |
| Untreated control | - | - | - | 1.0 | - |

As indicated in Table 18, the plant growth regulators of Examples 42 to 49 exhibited elongated plant heights and excellent plant growth promoting effects as compared with those of the plant growth regulators containing only Cys, GSSG, GB, vitamin B1 or inositol (Comparative Examples 60 to 67) and the plant growth regulator containing only EGT (Comparative Example 59). In addition, the elongated plant heights of the plant growth regulators of Examples 42 to 49 were greater than the theoretical value at mixing, and synergistic effects were confirmed.

### [Industrial Applicability]

The present invention achieves excellent plant growth promotion and can be used in the fields such as agriculture and horticulture.

## Claims

1. A plant growth regulator comprising:
a compound represented by Formula (I) below or its tautomer, or an agrochemically acceptable salt thereof; and
at least one component selected from the group consisting of an amino acid, a 2 or more and 10 or less amino-acid-long peptide, a betaine, an organic acid or a salt thereof, a nucleobase, a vitamin, and a sugar or a sugar alcohol: 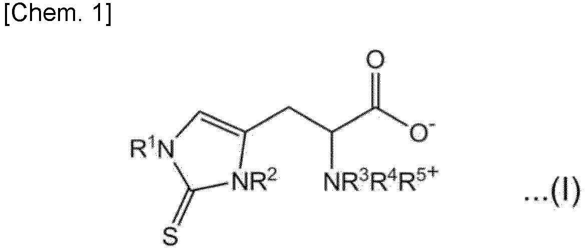
where in Formula (I), R¹ and R² each independently represent a hydrogen atom or an alkyl group having from 1 to 4 carbons, and R³ to R⁵ each independently represent an alkyl group having from 1 to 4 carbons.

2. The plant growth regulator according to claim 1, wherein the compound represented by Formula (I) is ergothioneine.

3. The plant growth regulator according to claim 1, wherein the amino acid is at least one amino acid selected from the group consisting of glutamic acid, aspartic acid, arginine, lysine, glycine, alanine, valine, leucine, threonine, phenylalanine, tyrosine, tryptophan, proline, serine, glutamine, asparagine, methionine, histidine, cysteine, γ-aminobutyric acid, 5-aminolevulinic acid and ornithine.

4. The plant growth regulator according to claim 1, wherein the peptide is glutathione.

5. The plant growth regulator according to claim 1, wherein the betaine is at least one betaine selected from the group consisting of an N-alkylsubstituted amino acid and carnitine.

6. The plant growth regulator according to claim 5, wherein the N-alkylsubstituted amino acid is glycine betaine.

7. The plant growth regulator according to claim 1, wherein the organic acid is a carboxylic acid having 1 or more and 10 or less carbons.

8. The plant growth regulator according to claim 1, wherein the organic acid is at least one organic acid selected from the group consisting of acetic acid, citric acid, and maleic acid.

9. The plant growth regulator according to claim 1, wherein the nucleobase is at least one nucleobase selected from the group consisting of guanine, thymine, and uracil.

10. The plant growth regulator according to claim 1, wherein the vitamin is at least one vitamin selected from the group consisting of vitamin B1 and vitamin D2.

11. The plant growth regulator according to claim 1, wherein the sugar or sugar alcohol is at least one sugar or sugar alcohol selected from the group consisting of trehalose and inositol.

12. The plant growth regulator according to claim 1, which is an agent for increasing seed yield, an agent for increasing plant height, an agent for increasing flower number, an agent for increasing aboveground part weight, or an agent for increasing underground part weight.

13. A method for promoting plant growth, comprising treating a plant with the plant growth regulator described in any one of claims 1 to 12.

14. A plant growth regulating product for preparing the plant growth regulator described in any one of claims 1 to 12, the plant growth regulating product comprising, as a combination preparation which is to be mixed for use: the compound represented by Formula (I) or its tautomer, or agrochemically acceptable salt thereof; and the at least one component, separately.
